(19) Europäisches Patentamt
European Patent Office
Office européen des brevets

(11) **EP 3 446 484 B1**

(12) **EUROPEAN PATENT SPECIFICATION**

(45) Date of publication and mention
of the grant of the patent:
**06.09.2023 Bulletin 2023/36**

(21) Application number: **17733150.1**

(22) Date of filing: **18.04.2017**

(51) International Patent Classification (IPC):
$H04N\ 19/33^{(2014.01)}$    $H04N\ 19/105^{(2014.01)}$
$H04N\ 19/126^{(2014.01)}$    $H04N\ 19/149^{(2014.01)}$
$H04N\ 19/187^{(2014.01)}$    $H04N\ 19/154^{(2014.01)}$

(52) Cooperative Patent Classification (CPC):
**H04N 19/33; H04N 19/105; H04N 19/126;
H04N 19/149; H04N 19/187;** H04N 19/154

(86) International application number:
**PCT/US2017/028211**

(87) International publication number:
**WO 2017/184656 (26.10.2017 Gazette 2017/43)**

(54) **ENHANCEMENT LAYER MASKING FOR HIGH-DYNAMIC RANGE VIDEO CODING**

VERSTÄRKUNGSSCHICHTMASKIERUNG ZUR VIDEOCODIERUNG MIT HOHEM DYNAMIKUMFANG

MASQUAGE DE COUCHE D'AMÉLIORATION POUR CODAGE VIDÉO À PLAGE DYNAMIQUE ÉLEVÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.04.2016 GB 201606808
19.04.2016 US 201662324438 P**

(43) Date of publication of application:
**27.02.2019 Bulletin 2019/09**

(73) Proprietor: **Dolby Laboratories Licensing
Corporation
San Francisco, CA 94103 (US)**

(72) Inventors:
• **LI, Cheng-Chi
802 Kaohsiung City (TW)**
• **SU, Guan-Ming
San Francisco
CA 94103 (US)**

(74) Representative: **Herre, Peter
Dendorfer & Herrmann
Patentanwälte Partnerschaft mbB
Neuhauser Straße 47
80331 München (DE)**

(56) References cited:
**EP-A2- 2 675 162**

• CHOI H ET AL: "SVC Application in Advanced T-DMB", IEEE TRANSACTIONS ON BROADCASTING, IEEE SERVICE CENTER, PISCATAWAY, NJ, US, vol. 55, no. 1, 1 March 2009 (2009-03-01), pages 51-61, XP011343462, ISSN: 0018-9316, DOI: 10.1109/TBC.2008.2010378
• HONGFEI DU ET AL: "Supporting Scalable Multimedia Streaming over Converged DVB-H and DTMB Networks", COMMUNICATIONS WORKSHOPS, 2008. ICC WORKSHOPS '08. IEEE INTERNATIONAL CONFERENCE ON, IEEE, PISCATAWAY, NJ, USA, 19 May 2008 (2008-05-19), pages 276-280, XP031265246, ISBN: 978-1-4244-2052-0
• ZICONG MAI ET AL: "Optimizing a Tone Curve for Backward-Compatible High Dynamic Range Image and Video Compression", IEEE TRANSACTIONS ON IMAGE PROCESSING, IEEE SERVICE CENTER, PISCATAWAY, NJ, US, vol. 20, no. 6, 1 June 2011 (2011-06-01), pages 1558-1571, XP011411814, ISSN: 1057-7149, DOI: 10.1109/TIP.2010.2095866

EP 3 446 484 B1

**Description**

TECHNOLOGY

The present invention relates generally to images. More particularly, an embodiment of the present invention relates to determine enhancement-layer masking thresholds for the coding of images and video sequences with high dynamic range.

BACKGROUND

As used herein, the term 'dynamic range' (DR) may relate to a capability of the human visual system (HVS) to perceive a range of intensity (e.g., luminance, luma) in an image, e.g., from darkest blacks (darks) to brightest whites (highlights). In this sense, DR relates to a 'scene-referred' intensity. DR may also relate to the ability of a display device to adequately or approximately render an intensity range of a particular breadth. In this sense, DR relates to a 'display-referred' intensity. Unless a particular sense is explicitly specified to have particular significance at any point in the description herein, it should be inferred that the term may be used in either sense, e.g. interchangeably.

As used herein, the term high dynamic range (HDR) relates to a DR breadth that spans the some 14-15 orders of magnitude of the human visual system (HVS). In practice, the DR over which a human may simultaneously perceive an extensive breadth in intensity range may be somewhat truncated, in relation to HDR. As used herein, the terms enhanced dynamic range (EDR) or visual dynamic range (VDR) may individually or interchangeably relate to the DR that is perceivable within a scene or image by a human visual system (HVS) that includes eye movements, allowing for some light adaptation changes across the scene or image. As used herein, EDR may relate to a DR that spans 5 to 6 orders of magnitude. Thus while perhaps somewhat narrower in relation to true scene referred HDR, EDR nonetheless represents a wide DR breadth and may also be referred to as HDR.

In practice, images comprise one or more color components (e.g., luma Y and chroma Cb and Cr) wherein each color component is represented by a precision of $n$-bits per pixel (e.g., $n$=8). Using linear luminance coding, images where $n \leq 8$ (e.g., color 24-bit JPEG images) are considered images of standard dynamic range, while images where $n > 8$ may be considered images of enhanced dynamic range. EDR and HDR images may also be stored and distributed using high-precision (e.g., 16-bit) floating-point formats, such as the OpenEXR file format developed by Industrial Light and Magic.

As used herein, the term "metadata" relates to any auxiliary information that is transmitted as part of the coded bitstream and assists a decoder to render a decoded image. Such metadata may include, but are not limited to, color space or gamut information, reference display parameters, and auxiliary signal parameters, as those described herein.

Most consumer desktop displays currently support luminance of 200 to 300 cd/m$^2$ or nits. Most consumer HDTVs range from 300 to 500 nits with new models reaching 1000 nits (cd/m$^2$). Such conventional displays thus typify a lower dynamic range (LDR), also referred to as a standard dynamic range (SDR), in relation to HDR or EDR. As the availability of HDR content grows due to advances in both capture equipment (e.g., cameras) and HDR displays (e.g., the PRM-4200 professional reference monitor from Dolby Laboratories), HDR content may be color graded and displayed on HDR displays that support higher dynamic ranges (e.g., from 700 nits to 5,000 nits or more). As appreciated by the inventors here, improved techniques for the coding and delivery of high-dynamic range images are desired.

EP 2 675 162 A2 discloses an encoder that receives one or more input pictures of enhanced dynamic range (EDR) to be encoded in a coded bit stream comprising a base layer and one or more enhancement layer. The encoder comprises a base layer quantizer (BLQ) and an enhancement layer quantizer (ELQ) and selects parameters of the BLQ and the ELQ by a joint BLQ-ELQ adaptation method which given a plurality of candidate sets of parameters for the BLQ, for each candidate set, computes a joint BLQ-ELQ distortion value based on a BLQ distortion function, an ELQ distortion function, and at least in part on the number of input pixels to be quantized by the ELQ. The encoder selects as the output BLQ parameter set the candidate set for which the computed joint BLQ-ELQ distortion value is the smallest. Example ELQ, BLQ, and joint BLQ-ELQ distortion functions are provided.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section. Similarly, issues identified with respect to one or more approaches should not assume to have been recognized in any prior art on the basis of this section, unless otherwise indicated.

BRIEF DESCRIPTION OF THE DRAWINGS

An embodiment of the present invention is illustrated by way of example, and not in way by limitation, in the figures of the accompanying drawings and in which like reference numerals refer to similar elements and in which:

FIG. 1 depicts an example process for the coding and video delivery of HDR video according to an embodiment of this invention;
FIG. 2A depicts an example predictor according to prior art;
FIG. 2B depicts an example predictor according to an embodiment of this invention; and
FIG. 3 depicts an example process for determining the threshold for highlights masking in HDR coding according to an embodiment of this invention.

DESCRIPTION OF EXAMPLE EMBODIMENTS

Video coding and delivery of high dynamic range (HDR) images is described herein. In the following description, for the purposes of explanation, numerous specific details are set forth in order to provide a thorough understanding of the present invention. It will be apparent, however, that the present invention may be practiced without these specific details. In other instances, well-known structures and devices are not described in exhaustive detail, in order to avoid unnecessarily occluding, obscuring, or obfuscating the present invention.

OVERVIEW

Example embodiments described herein relate to methods to determine a highlights and/or blacks masking threshold for the layered video coding and delivery of high-dynamic range images. The invention is defined by the independent claims. The dependent claims concern optional features of some embodiments of the invention.

VIDEO DELIVERY FOR HIGH DYNAMIC RANGE (HDR) VIDEO

According to a recent white paper by the Blu-Ray Disc Association, titled, *"Audio Visual Application Format Specifications for BD-ROM Version 3. 0,"* White paper Blu-Ray Disc Read-only Format (Ultra HD Blu-ray), Blu-Ray Disc Association, July 2015, which is incorporated herein by reference in its entirety, the proposed Ultra HD Blu-ray standard supports a mandatory single-layer (10-bit, YCbCr 4:2:0) Blu-Ray Disc Movie (BDMV) EDR format (also to be referred as the HDR10 format) and an optional Dolby Vision, dual-layer, HDR format. The Dolby Vision HDR stream is composed by a base layer (BL) BDMV EDR video stream and a Dolby Vision enhancement layer (EL) video stream with associated metadata. A generic Blu-ray decoder will only be able to play back the HDR10 base layer; however, a Dolby Vision-enabled player will be able to combine the base layer and the enhancement layer to generate a 12-bit HDR video output with better dynamic range than the dynamic range of the default HDR10 stream.
The Dolby Vision stream is characterized by the following:

- BT. 2020 color primaries with non-constant luminance
- An EOTF (Electro-optical transfer function) based on SMPTE ST 2084
- A combined BL/EL bit depth of 12 bits

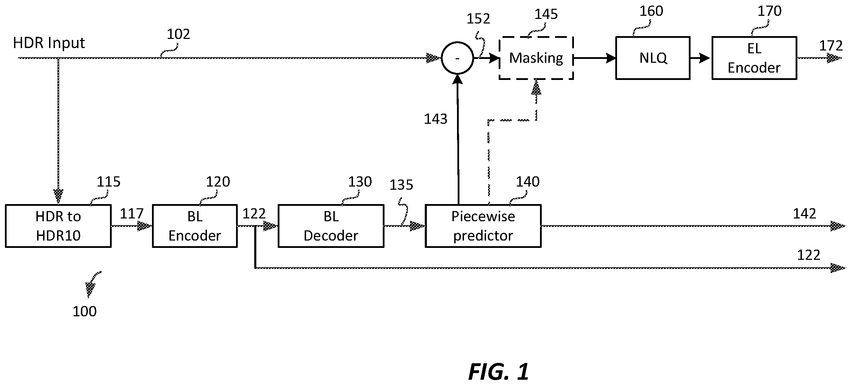

FIG. 1 depicts a layered HDR encoder architecture (100) in accordance with an example embodiment. In an embodiment, all video coding in the base and enhancement coding layers may be performed in the YCbCr 4:2:0 color space. HDR image encoder (100) may be implemented by one or more computing devices.
The HDR image encoder (100) is configured to receive a high-resolution (e.g., UHD) input HDR image (102). As used herein, an "input HDR image" refers to an enhanced or high dynamic range image data (e.g., raw image data captured by a high-end image acquisition device and the like) that may be used to derive a HDR version of the input image. The input HDR image (102) may be in any color format that supports a high dynamic range color gamut (e.g., RGB, YCbCr, HLG, ICtCp, and the like). In an embodiment, the input HDR image is a 12-bit or higher YCbCr image, which may have been originally in the RGB space. As used herein, for an image with multiple color components (e.g., RGB or YCbCr), the term n-bit image (e.g., 12-bit or 8-bit image) denotes an image where each pixel of its color components is represented by an n-bit pixel. For example, in an 8-bit RGB image, each pixel comprises of three color components, each color component (e.g., R, G, or B) is represented by 8-bits, for a total of 24 bits per color pixel.
Each pixel may optionally and/or alternatively comprise up-sampled or down-sampled pixel values for one or more of the channels in the color space. It should be noted that in some embodiments, in addition to three primary colors such as red, green and blue, different primary colors may be concurrently used in a color space as described herein, for example, to support a wide color gamut; in those embodiments, image data as described herein includes additional pixel values for those different primary colors and may be concurrently processed by techniques as described herein.
HDR to HDR10 (115) converter converts the high bit-depth HDR input (102) to a BL image (117) of lower depth (e.g., a 10-bit image). Typically, it is beyond the scope of any coding standard on how the 10-bit HDR Layer (117) is generated from the original HDR input (102). Some embodiments may use dynamic-range conversion techniques such as those described in PCT Application Ser. No. PCT/US2013/073085, filed on Dec. 4, 2013, also published as WO 2014/107255, to be referred as the '085 Application, which is incorporated herein by reference in its entirety. In some embodiments, given a 12-bit input HDR (102), the 10-bit HDR10 stream (117) may be generated by a simple truncation of the two least significant bits.

BL image encoder (120) is configured to encode/format the BL image (117) to generate a coded (or compressed) BL image (122). BL encoder may be any of the known video encoders, such as those specified by the ISO/IEC AVC (ITU H.264) or HEVC (H.265) standards, or other encoders, such as Google's VP9 and the like.

BL decoder (130) in the HDR image encoder (100) decodes the image data in the base layer image container into a decoded base layer image (135). Signal 135 represents the decoded BL as will be received by a compliant receiver. The decoded base layer image (135) is different from the BL image (117), as the decoded base layer image comprises coding changes, rounding errors and approximations introduced in the encoding and decoding operations performed by the BL encoder (120) and the BL decoder (130).

Predictor (140) performs one or more operations relating to predicting the HDR input signal (102) based on the decoded BL stream (135). The predictor (140) attempts to implement the reverse of operations performed by the HDR to HDR10 converter (115). Example embodiments of such a predictor are described in the '085 PCT Application. The predictor output (143) is subtracted from the HDR input (102) to generate residual 152.

In an embodiment, predictor (140) may be a piecewise-liner predictor. The slopes of the segments in the predictor (140) are used to mask the residual (152) according to a highlights threshold designed according to methods of this invention.

In an example embodiment, an enhancement layer quantizer (NLQ) (160) in the HDR image encoder (100) is configured to quantize the HDR residual values (152) from a high bit-depth digital representation (e.g., 12 bits) to a lower digital representation (e.g., 10 bits or 8 bits) using an NLQ function determined by one or more NLQ parameters. The NLQ function may be linear, piece-wise linear, or non-linear. An example of non-linear NLQ design is described in the '085 PCT Application. Another embodiment will also be presented later on in this specification.

Enhancement layer (EL) encoder (170) is configured to encode the residual values in an enhancement layer image container to generate the coded EL stream (172). EL encoder (170) may be any of the known video encoders, such as those specified by the ISO/IEC AVC or HEVC standards, or other encoders, such as Google's VP9 and the like. EL and BL encoders may be different or they may be the same.

The set of parameters used in the predictor (140) and NLQ (160) may be transmitted to a downstream device (e.g., an HDR decoder) as a part of supplemental enhancement information (SEI) or other similar metadata carriers available in video bitstreams (e.g., in the enhancement layers) as metadata (142). Such metadata may include, but are not limited to, information related to: color space or gamut information, dynamic range information, tone mapping information, or other predictor, up-scaling, and quantizer operators, such as those described herein.

After generating all parts of the layered HDR stream, the coded EL stream (172), the coded BL stream (122), and related metadata (142) are multiplexed and packetized so that they can be stored in a storage medium and/or be transmitted to a decoder.

In a dual layer system, such as the one depicted in FIG. 1, the major function of the enhancement layer is to compensate for the missing information from the base layer. The bit reduction to generate the base layer, in combination with the characteristics of SMPTE 2084 or gamma coding, may result in coding artifacts, such as banding, blocking, or color bleeding, even when an enhancement layer is being employed.

The term "PQ" as used herein refers to perceptual quantization. The human visual system responds to increasing light levels in a very non-linear way. A human's ability to see a stimulus is affected by the luminance of that stimulus, the size of the stimulus, the spatial frequency(ies) making up the stimulus, and the luminance level that the eyes have adapted to at the particular moment one is viewing the stimulus. In a preferred embodiment, a perceptual quantizer function maps linear input gray levels to output gray levels that better match the contrast sensitivity thresholds in the human visual system. An example of a PQ mapping function is given in the SMPTE ST 2084 specification, where given a fixed stimulus size, for every luminance level (i.e., the stimulus level), a minimum visible contrast step at that luminance level is selected according to the most sensitive adaptation level and the most sensitive spatial frequency (according to HVS models). Compared to the traditional gamma curve, which represents the response curve of a physical cathode ray tube (CRT) device and coincidently may have a very rough similarity to the way the human visual system responds, a PQ curve, as described in SMPTE ST 2084, imitates the true visual response of the human visual system using a relatively simple functional model.

It has been observed that PQ coding assigns more codewords in the dark areas than in highlights. As a result, during coding there is an increased occurrence of banding and blocking artifacts or color bleeding in the highlights. It is a goal if this invention to provide methods to reduce such coding artifacts.

In a method described herein, the visual quality of the output is enhanced by using a method denoted as *codeword range amplification* (CRA). In simple terms, the method operates as follows. Denote the bit depth in the base layer (BL) as $b$ (e.g., $b = 10$), then the total number of codewords in the BL is $B=2^b$ and each un-normalized codeword value is between [0, $B$-1]. Consider a base layer codeword $S_h < B$-1 such that all codewords in the base layer larger than $S_h$ are predicted with the same value $V_h$. If the enhancement layer is used only for all base layer codewords larger than $S_h$, then the corresponding residual (152) of all codewords in $[S_h, B$-1] has more of an "image-like" representation and can be coded more efficiently, thus reducing coding artifacts. Methods to determine an optimum $S_h$ threshold according to distortion model are described in the next Section.

The proposed method is fully compliant with existing Dolby Vision decoders which support piecewise-linear or non-linear prediction during decoding.

Codeword Range Amplification

In a typical dual-layer, predictive, codec, the enhancement layer is configured to code directly the residual (152) between the original input and its predicted value. As discussed earlier, in the HDR coding system (100), this residual represents the least significant bits of a high-dynamic input (102), which has statistical characteristics of highfrequency noise data, which are very hard to compress. In this invention, a masking operation (145) restricts the amount of data to be coded by the enhancement layer. This masking, in combination with a non-linear quantizer (160), allows the EL encoder (170) to use more coding bits for a smaller range of image-like input data, thus requiring a far-smaller bit rate for the enhancement layer than traditional dual-layer encoders.

Let $v_i$ denote the $i$-th pixel in the HDR input (102), which is typically at least 12 bits and may be coded using a PQ or gamma EOTF. Let $s_i$ denote the $i$-th pixel in the base layer (e.g., HDR10 (117)). In an embodiment, without limitation, both $v_i$ and $s_i$ may be normalized to have values between [0 1]. Denote the bit depth in the base layer (BL) as $b$ (e.g., $b = 10$), then the total number of codewords in the BL is $B=2^b$ and each un-normalized codeword value is between [0, $B$-1].

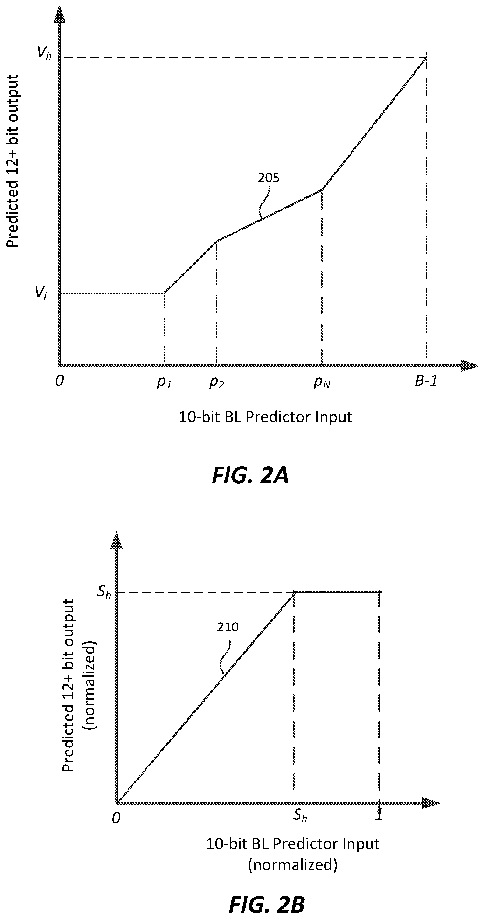

FIG. 2A depicts an example of a traditional piece-wise prediction function (205) according to prior art. The prediction function may be divided into linear or non-linear segments using $N$ pivot points $p_1, p_2,..., p_N$. The output of the predictor may be constrained to be within the range $(V_l, V_h)$, representing the range between the measured minimum and maximum pixel values in a frame or a scene under consideration. Examples of methods to design such a predictor can be found in PCT Application Ser. No. PCT/US2015/014482, published as WO 2015/123067, "Piecewise inter-layer predictor for signals with enhanced dynamic range," by G-M Su, et al., and U.S. Provisional Patent Application Ser. No. 62/249,779, filed on Nov. 2, 2015, "Piecewise-linear inter-layer predictor for high-dynamic range coding," also filed as PCT Application Ser. No. PCT/US2016/058906, filed on Oct. 26, 2016, each of which is incorporated herein by reference in its entirety.

FIG. 2B depicts an example of prediction function (210) designed according to an embodiment. As depicted in FIG. 2B, the predictor has only two segments, a linear segment from [0, $S_h$ ] and a constant segment for any values higher than $S_h$. Hence, for input codewords larger than $S_h$ the residual is simply the difference of the input HDR image from the constant. Such a residual has more of image-like properties than noise properties, hence it is easier to compress. After masking (145), the masked residual (152) may be expressed as:

$$r_i = \begin{cases} 0, & if\ s_i < S_h \\ v_i - S_h, & otherwise \end{cases} . \qquad (1)$$

The design challenge is to identify the optimum threshold $S_h$.

Non-Linear Quantization

The parameters of the non-linear quantizer (NLQ) (160) may be selected using the methodology in the '085 Application. For example, denote the maximal positive residual value in frame $f$ as $X_f^+$ and the absolute value of the minimal negative residual value in frame $f$ as $X_f^-$, or

$$X_f^+ = \max\{r_{fi} \mid i = 0,....,p-1\},$$

$$X_f^- = \mid \min\{r_{fi} \mid i = 0,....,p-1\} \mid, \qquad (2)$$

where $p$ denotes the number of pixels in frame $f$.

For a scene with $F$ frames, one can find the maximal value of $X_f^+$ among all $F$ frames, and maximal value of $X_f^-$ among all $F$ frames, e.g.,

$$X^+ = \max\{X_f^+ \mid f = 1,....,F\},$$

$$X^- = \max\{X_f^- \mid f = 1,....,F\}. \tag{3}$$

Given the bit-depth of the enhancement layer encoder, $EL\_bitdepth$ (e.g., 10 bits), the NLQ setting for the entire scene may be adjusted as

$$Offset = (2^{EL\_bitdepth} - 1)\frac{X^-}{X^- + X^+}$$

$$Level = \max\{(2^{EL-bitdepth} - 1) - Offset, Offset\} \tag{4a}$$

$$X_{MAX} = (1+\Delta)\max\{X^-, X^+\},$$

where $\Delta$ is a small constant.

Let

$$SL = \frac{Level}{X_{\max} - T}, \tag{4b}$$

where $T$ is a relatively small number and in some embodiments $T=0$.
Then, given input residuals $r$, after clipping $r$ within the range ($-X_{MAX},$ $X_{MAX}$), the quantization operations in (160) may be expressed as

$$Q(r) = \begin{cases} floor(Offset + (SL*(r-T))+0.5) & \text{if } r > T \\ Offset & \text{if } |r| \le T \\ floor(Offset + (SL*(r+T))-0.5) & \text{if } r < -T \end{cases} \tag{5}$$

where $Q(r)$ denotes the quantized output, $SL$ denotes the slope of $Q(r)$ within ($T, X_{MAX}$), and the $Offset$ value representing the output codeword when the residual $r = 0$.

Parameters $T, Offset, X_{MAX}$, and $SL$ (or $Level$) may be defined separately for each color component of residual signal $r$ and may be communicated to a receiver using metadata. In some embodiments, one or more of the NLQ quantization parameters may also be defined for a whole frame, one or more partitions or sub-regions of a frame, or for a group of frames (e.g., a scene).

Selecting a Masking Threshold $S_h$

From FIG. 2B, a higher masking threshold $S_h$ allows for a smaller number of input codewords to be coded in the enhancement layer, thus allowing for finer quantization, but it covers a smaller range of highlight pixel values. A lower threshold value yields coarser quantization, but supports a wider range of highlights. An optimal threshold, one that minimizes the overall distortion under certain criteria, may be derived as follows.

Let $b$ denote the bit-depth of the input HDR stream $v_i$. Denote a set $\Phi_m = \{i \mid v_i = \frac{m}{2^b}\}$ to represent the pixel index having pixel value $\dfrac{m}{2^b}$. The number of elements in the set $\Phi_m$ is $h_m$. Thus, the histogram of all (normalized) $\{v_j\}$ pixels can be represented as $\{h_j\}$ with $2^b$ bins. Without limitation, one measure of pixel complexity or activity in a frame is the local pixel variance or standard deviation. For example, let $n_i$ be the $W_\sigma \times W_\sigma$ block centering at pixel $i$ (e.g., $W_\sigma$ = 8 or 16). In an embodiment, the local standard deviation, $\sigma_i$, for pixel $i$ may be computed as:

$$\mu_i = \frac{1}{W_\sigma^2} \sum_{j \in n_i} v_j \, , \tag{6}$$

$$\sigma_i = \sqrt{\frac{1}{W_\sigma^2} \sum_{j \in n_i} (v_j - \mu_i)^2} \, . \tag{7}$$

Then, given all pixel values with value $m$, their cumulative standard deviation may be computed as

$$w_m = \sum_{i \in \Phi_m} \sigma_i \, . \tag{8}$$

Similarly, the average standard deviation at bin $m$ is given by

$$g_m = \frac{1}{h_m} \sum_{i \in \Phi_m} \sigma_i \, . \tag{9}$$

In an embodiment, an example of computing $w_m$ values is shown below in pseudocode.

```
% divide the input image into non-overlapping blocks (e.g., 8 x 8 or 16 x 16 blocks)
set all wm = 0; hm = 0; m = 0, 1, 2, …, 2^b-1
for each block (i) in the input image;

        compute its standard deviation σi ; % (e.g., using equations (6) and (7))
        for each pixel value (vj) in the block
            if (vj == m) {
                    wm = wm + σi;
                    hm = hm + 1;
            }
    end
end
```

The code above takes into consideration that most modern image and video codecs (such as AVC and HEVC) are block-based and that typically the standard deviation of an image block provides a very good metric to adjust its quantization according to the desired target bit rate. A person skilled in the art would appreciate that metrics based on the standard deviation of input codewords represent just one way to predict the allocated bits per codeword, and that alternative pixel complexity methods, as known in the art, could be applied.

In most coding systems, the combined bit rate allocated to both the base layer and the enhancement layer is specified based on the storage and/or streaming requirements. Let $R_{BL}$ denote the target bit rate for the base layer and let $\beta$ denote the percentage (e.g., 20%) of the BL bit rate allowed for the enhancement layer, or $R_{EL} = \beta R_{BL}$. Assuming a bit-rate control based on a function of the activity within a given frame, the bit rate of the base layer may be approximated as

$$\hat{R}_{BL}(R_{BL}) = \sum_{m=0}^{2^b-1} h_m \cdot f_{BL}(g_m, R_{BL}) \,, \tag{10}$$

where $f_{BL}(g_m, R_{BL})$ denotes a bit-allocation function based on the bit-depth of the BL codec and the target bit rate $R_{BL}$.

Given a threshold $S_h$, and given that only codewords larger than $S_h$ are coded in the enhancement layer, the bit rate allocation in the enhancement layer may be approximated using

$$\hat{R}_{EL}(S_h, R_{EL}) = \sum_{m=S_h \cdot 2^b}^{2^b-1} h_m \cdot f_{EL}(g_m, R_{EL}) \,, \tag{11}$$

where $f_{EL}(g_m, R_{EL})$ denotes a bit-allocation function based on the bit-depth of the EL codec and the target bit rate $R_{EL}$. In an embodiment, it may be assumed that the $f_{EL}$ and $f_{BL}$ functions are inter-related via a transfer function $f_t()$, as in

$$f_{EL}(\cdot,\cdot) = f_t(f_{BL}(\cdot,\cdot)) \,. \tag{12}$$

When both layers use the same codec and at the same bit-depth (say, HEVC Main 10), in an embodiment, the $f_t$ function may be modeled as a simple linear function with a constant slope $\alpha$ (e.g., $\alpha = 0.8$), as in

$$f_t(x) = \alpha \cdot x \,. \tag{13}$$

Consider an optimum threshold, $S_h^*$. Let

$$T_{S_h}(R_{BL}) = \frac{\hat{R}_{EL}(S_h^*, R_{EL})}{\hat{R}_{BL}(R_{BL})} = \frac{\displaystyle\sum_{m=S_h^* \cdot 2^b}^{2^b-1} h_m \cdot f_{EL}(g_m, R_{EL})}{\displaystyle\sum_{m=0}^{2^b-1} h_m \cdot f_{BL}(g_m, R_{BL})} \,, \tag{14}$$

denote the ratio of approximated bit rates $\hat{R}_{EL}$ and $\hat{R}_{BL}$, which needs to be as close to the target $\beta$ ratio as possible. Given equation (12), equation (14) yields

$$T_{S_h}(R_{BL}) = \frac{\displaystyle\sum_{m=S_h^* \cdot 2^b}^{2^b-1} h_m \cdot f_t(f_{BL}(g_m, R_{BL}))}{\displaystyle\sum_{m=0}^{2^b-1} h_m \cdot f_{BL}(g_m, R_{BL})} \,. \tag{15}$$

Under the simplified case, where the quantizers in both encoders are related via a linear function, from equation (13), equation (15) yields

$$T_{S_h}(R_{BL}) = \frac{\sum_{m=S_h \cdot 2^b}^{2^b-1} \alpha \cdot w_m}{\sum_{m=0}^{2^b-1} w_m}. \tag{16}$$

Then, the optimal threshold may be found as the one that minimizes the difference between the estimated ($T_{S_h}$) and the target bit ratio $\beta$, as:

$$S_h^* = \arg\min_{S_h}(|\beta - T_{S_h}(R_{BL})|). \tag{17}$$

Experimental results indicate that the threshold computed using equation (17) is very close to a threshold computed by measuring the Peak Signal to Noise ratio (PSNR) of the coded images and selecting the threshold that maximizes PSNR.

From a computational point of view, notice that given $w_m$ values, the denominator in (16) needs to be computed only once. After computing the denominator, computing (17) involves only computing a running sum of scaled $w_m$ values, for the codewords from $S_h$ $2^b$ to $B$-1. Typically, the threshold will be computed on a per scene basis; however, it can be computed on a per frame, or frame-region as well. As far as decoding is concerned, the prediction function (210) can be represented by two linear functions separated by pivot $S_h$. The first segment is a 1$^{st}$-order polynomial $y = ax + b$, with $a$=1 and $b$=0. The second polynomial is a constant with a fixed value (e.g., $y = S_h$). In a decoder, given decoded and inverse-quantized base layer input data $s_i$, the estimated HDR output will be given by

$$\hat{v}_i = \begin{cases} s_i & if\ s_i < S_h \\ r_i + S_h & otherwise \end{cases}. \tag{18}$$

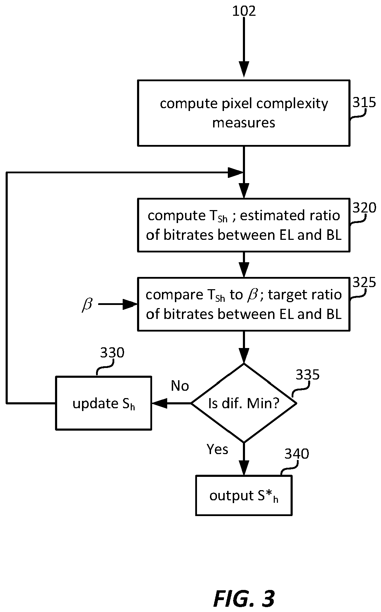

FIG. 3 depicts an example process for determining the optimum masking threshold for the enhancement layer according to an embodiment. Given the HDR input (102), in (315), pixel complexity measures, e.g., the $w_m$ sums of standard deviation values (and optionally, $h_m$ histogram values), are computed (e.g., using equations (6)-(8) and/or the block-based algorithm described earlier). Then, for a given threshold $S_h$, in (320), the corresponding $T_{S_h}$ values are computed according to a bit-rate allocation model (e.g., using equations (15) or (16)). Given $= \frac{R_{EL}}{R_{BL}}$, the target ratio of the bitrates in the enhancement layer and the base layer, in (335), the value of $d_{S_h} = |\beta - T_{S_h}|$ an estimated distortion value, is computed. Steps (320) to (335) are repeated for different values of $S_h$, until an optimal threshold value $(S_h^*)$, one that minimizes $d_{S_h}$, is found.

The previous discussion assumed a single highlights threshold for which all residuals are coded in the enhancement layer. The proposed scheme can easily be expanded to have two masking thresholds, one in the highlights ($S_h$), as discussed earlier, and one in the blacks ($S_l$), or replace the highlights threshold with a blacks threshold ($S_l$). For example, the masked residual (152) will be given by

$$r_i = \begin{cases} v_i - S_l, & if\ 0 < s_i \leq S_l \\ 0, & if\ S_l < s_i < S_h, \\ v_i - S_h, & if\ s_i \geq S_h \end{cases} \tag{19}$$

when using two thresholds, and by

$$r_i = \begin{cases} v_i - S_l, & if\ s_i \leq S_l \\ 0, & otherwise \end{cases}, \tag{20}$$

when using a single blacks threshold.

When using two thresholds, in an embodiment, one may use equation (17) to determine the optimum $S_h^*$ value assuming a single threshold, and then divide the range $1-S_h^*$ into two parts so that given $S_l$, $S_l + (1- S_h) = (1- S_h^*)$, or $S_h = S_h^* + S_l$. In another embodiment, equation (16) may be adapted as

$$T_{S_h}(R_{BL}) = \frac{\sum_{m=0}^{S_l 2^b} \alpha \cdot w_m + \sum_{m=S_h \cdot 2^b}^{2^b -1} \alpha \cdot w_m}{\sum_{m=0}^{2^b -1} w_m}, \qquad (21)$$

and then apply a joint-search technique to identify the two optimum thresholds.

When using a single black threshold, for $S_h$ = 1, equation (21) yields

$$T_{S_l}(R_{BL}) = \frac{\sum_{m=0}^{S_l 2^b} \alpha \cdot w_m}{\sum_{m=0}^{2^b -1} w_m}, \qquad (22)$$

and equation (17) becomes

$$S_l^* = \arg \min_{S_l}(| \beta - T_{S_l}(R_{BL}) |) \qquad . \qquad (23)$$

EXAMPLE COMPUTER SYSTEM IMPLEMENTATION

Embodiments of the present invention may be implemented with a computer system, systems configured in electronic circuitry and components, an integrated circuit (IC) device such as a microcontroller, a field programmable gate array (FPGA), or another configurable or programmable logic device (PLD), a discrete time or digital signal processor (DSP), an application specific IC (ASIC), and/or apparatus that includes one or more of such systems, devices or components. The computer and/or IC may perform, control, or execute instructions relating to video coding and delivery of HDR video, such as those described herein. The computer and/or IC may compute any of a variety of parameters or values that relate to video coding and delivery of HDR video processes described herein. The image and video embodiments may be implemented in hardware, software, firmware and various combinations thereof.

Certain implementations of the invention comprise computer processors which execute software instructions which cause the processors to perform a method of the invention. For example, one or more processors in a display, an encoder, a set top box, a transcoder or the like may implement methods related to video coding and delivery of HDR video as described above by executing software instructions in a program memory accessible to the processors. The invention may also be provided in the form of a program product. The program product may comprise any non-transitory medium which carries a set of computer-readable signals comprising instructions which, when executed by a data processor, cause the data processor to execute a method of the invention. Program products according to the invention may be in any of a wide variety of forms. The program product may comprise, for example, physical media such as magnetic data storage media including floppy diskettes, hard disk drives, optical data storage media including CD ROMs, DVDs, electronic data storage media including ROMs, flash RAM, or the like. The computer-readable signals on the program product may optionally be compressed or encrypted.

Where a component (e.g. a software module, processor, assembly, device, circuit, etc.) is referred to above, unless otherwise indicated, reference to that component (including a reference to a "means") should be interpreted as including as equivalents of that component any component which performs the function of the described component (e.g., that is functionally equivalent), including components which are not structurally equivalent to the disclosed structure which performs the function in the illustrated example embodiments of the invention.

**Claims**

1. A method for coding images, the method being performed by a dual layer encoder, comprising a base layer (BL) encoder and an enhancement layer (EL) encoder, the method comprising:

   receiving with a processor a first image (102) in a first bit depth;
   computing (315) pixel complexity measures for pixel values in the first image;
   receiving a target bitrate ratio ($\beta$), the target bitrate ratio comprising a ratio of a target bit rate in the enhancement layer over a target bit rate in the base layer of the encoder;
   for each of two or more candidate highlights-threshold values for determining an optimum highlights threshold value in an inter-layer prediction function, wherein for all input values to the inter-layer prediction function larger than the optimum highlights threshold value the corresponding predicted output value corresponds to the optimum highlights threshold value, and wherein for all input values to the inter-layer prediction function lower or equal to the optimum highlights threshold value the corresponding predicted output value is equal with the input value:

   computing (320) an estimated bitrate ratio that comprises a ratio of an estimated bit rate in the enhancement layer over an estimated bit rate in the base layer for the candidate highlights-threshold value, wherein computing the estimated bitrate ratio comprises computing:

$$T_{S_h}(R_{BL}) = \frac{\sum\limits_{m=S_h \cdot 2^b}^{2^b-1} \alpha \cdot w_m}{\sum\limits_{m=0}^{2^b-1} w_m},$$

   wherein $w_m$ for $m = 0$ to $2^b-1$, denote a pixel complexity measure for all pixels with value $m$, wherein computing $w_m$ comprises computing a cumulative standard deviation of pixels in the first image with value equal to $m$, $\alpha$ is a constant, $S_h$ denotes a candidate highlights-threshold value in [0, 1), and $b$ is the bit-depth in the base layer encoder, and wherein the base layer encoder and the enhancement layer encoder use the same codec and the same bit-depth;
   computing a distortion measure (325) based on the estimated bitrate ratio and the target bitrate ratio;

   determining the optimum highlights threshold value by computing the candidate highlights-threshold value among the two or more candidate highlight-threshold values which minimizes the distortion measure;
   receiving with the processor a second image in a second bit depth, wherein the second bit depth is lower than the first bit depth, wherein the first image and the second image represent the same visual scene;
   encoding the second image using the base layer encoder to generate a coded BL bitstream;
   decoding the BL bitstream to generate a decoded BL image;
   applying the inter-layer prediction function to the decoded BL image to generate a predicted first image;
   computing a residual image based on the predicted first image and the first image;
   applying a masking operation to the residual image to generate a masked residual image; and
   encoding the masked residual image with the enhancement layer encoder to generate a coded EL bitstream, wherein the masking operation comprises setting to zero all pixel values in the residual image that are lower than the optimum highlights threshold.

2. A method for coding images, the method being performed by a dual layer encoder, comprising a base layer (BL) encoder and an enhancement layer (EL) encoder, the method comprising:

   receiving with a processor a first image (102) in a first bit depth;
   computing (315) pixel complexity measures for pixel values in the first image;
   receiving a target bitrate ratio ($\beta$), the target bitrate ratio comprising a ratio of a target bit rate in the enhancement layer over a target bit rate in the base layer of the encoder;
   for each of two or more candidate blacks-threshold values for determining an optimum blacks threshold value in an inter-layer prediction function, wherein for all input values to the inter-layer prediction function lower than the optimum blacks threshold value the corresponding predicted output value corresponds to the optimum blacks threshold value, and wherein for all input values to the inter-layer prediction function larger or equal to the optimum blacks threshold value the corresponding predicted output value is equal with the input value:

computing (320) an estimated bitrate ratio that comprises a ratio of an estimated bit rate in the enhancement layer over an estimated bit rate in the base layer for the candidate blacks-threshold value, wherein computing the estimated bitrate ratio comprises computing:

$$T_{S_l}(R_{BL}) = \frac{\displaystyle\sum_{m=0}^{S_l 2^b} \alpha \cdot w_m}{\displaystyle\sum_{m=0}^{2^b-1} w_m},$$

wherein $w_m$ for $m = 0$ to $2^b-1$, denote a pixel complexity measure for all pixels with value $m$, wherein computing $w_m$ comprises computing a cumulative standard deviation of pixels in the first image with value equal to $m$, $\alpha$ is a constant, $S_l$ denotes a candidate blacks-threshold value in [0, 1), and $b$ is the bit-depth in the base layer encoder, and wherein the base layer encoder and the enhancement layer encoder use the same codec and the same bit-depth;
computing a distortion measure (325) based on the estimated bitrate ratio and the target bitrate ratio;

determining the optimum blacks threshold value by computing the candidate blacks-threshold value among the two or more candidate blacks-threshold values which minimizes the distortion measure;
receiving with the processor a second image in a second bit depth, wherein the second bit depth is lower than the first bit depth, wherein the first image and the second image represent the same visual scene;
encoding the second image using the base layer encoder to generate a coded BL bitstream;
decoding the BL bitstream to generate a decoded BL image;
applying the inter-layer prediction function to the decoded BL image to generate a predicted first image;
computing a residual image based on the predicted first image and the first image;
applying a masking operation to the residual image to generate a masked residual image; and
encoding the masked residual image with the enhancement layer encoder to generate a coded EL bitstream, wherein the masking operation comprises setting to zero all pixel values in the residual image that are larger than the optimum blacks threshold.

3. The method of claim 1 or claim 2, wherein computing the distortion measure comprises computing an absolute value of the difference between the target bitrate ratio and the estimated bitrate ratio.

4. The method of any of claims 1-3, further comprising:
applying a non-linear quantizer to the masked residual image to generate a quantized residual image and encoding the quantized residual image with the enhancement layer encoder to generate the coded EL bitstream.

5. The method of any of claims 1-4, wherein the first bit depth is 12 bits or higher.

6. The method of any of claims 1-5, wherein the first image is a high-dynamic range image.

7. The method of any of claims 1-6, wherein the bit depth of the base layer (b) is 10 bits.

8. An apparatus comprising a processor and configured to perform the method of any of claims 1-7.

9. A computer program product having stored thereon computer-executable instruction for executing the method of any of claims 1-7 with one or more processors.

**Patentansprüche**

1. Verfahren zum Codieren von Bildern, wobei das Verfahren durch einen Zweischicht-Encoder durchgeführt wird, der einen Basisschicht-(BL)-Encoder und einen Anreicherungsschicht-(EL)-Encoder umfasst, wobei das Verfahren Folgendes umfasst:

Empfangen eines ersten Bildes (102) mit einer ersten Bittiefe durch einen Prozessor;

Berechnen (315) von Pixelkomplexitätsmaßen für Pixelwerte im ersten Bild;

Empfangen eines Ziel-Bitratenverhältnisses ($\beta$), wobei das Ziel-Bitratenverhältnis ein Verhältnis einer Ziel-Bitrate in der Anreicherungsschicht zu einer Ziel-Bitrate in der Basisschicht des Encoders umfasst;

für jeden von zwei oder mehr in Frage kommenden Hervorhebungs-Schwellenwerten die Bestimmung eines optimalen Hervorhebungs-Schwellenwertes in einer Zwischenschicht-Vorhersagefunktion, wobei für alle Eingabewerte in die Zwischenschicht-Vorhersagefunktion, die größer als der optimale Hervorhebungsschwellenwert sind, der entsprechende vorhergesagte Ausgabewert dem optimalen Hervorhebungsschwellenwert entspricht, und wobei für alle Eingabewerte in die Zwischenschicht-Vorhersagefunktion, die kleiner oder gleich dem optimalen Hervorhebungsschwellenwert sind, der entsprechende vorhergesagte Ausgabewert gleich dem Eingabewert ist:

Berechnen (320) eines geschätzten Bitratenverhältnisses, das ein Verhältnis einer geschätzten Bitrate in der Anreicherungsschicht zu einer geschätzten Bitrate in der Basisschicht für den in Frage kommenden Hervorhebungs-Schwellenwert umfasst, wobei das Berechnen des geschätzten Bitratenverhältnisses die folgende Berechnung umfasst:

$$T_{S_h}(R_{BL}) = \frac{\displaystyle\sum_{m=S_h \cdot 2^b}^{2^b-1} \alpha \cdot w_m}{\displaystyle\sum_{m=0}^{2^b-1} w_m}$$

wobei $w_m$ für $m =0$ bis $2^b$-1 ein Pixelkomplexitätsmaß für alle Pixel mit dem Wert m bezeichnet, wobei das Berechnen von $w_m$ das Berechnen einer kumulativen Standardabweichung von Pixeln in dem ersten Bild mit einem Wert gleich m umfasst, $\alpha$ eine Konstante ist, $S_h$ einen in Frage kommenden Hervorhebungs-Schwellenwert in [0, 1) bezeichnet, und b die Bittiefe in dem Basisschicht-Encoder ist, und wobei der Basisschicht-Encoder und der Anreicherungsschicht-Encoder denselben Codec und dieselbe Bittiefe verwenden;

Berechnen eines Verzerrungsmaßes (325) auf der Grundlage des geschätzten Bitratenverhältnisses und des Zielbitratenverhältnisses;

Bestimmen des optimalen Hervorhebungs-Schwellenwerts durch Berechnen des in Frage kommenden Hervorhebungs-Schwellenwerts aus den zwei oder mehr in Frage kommenden Hervorhebungs-Schwellenwerten, der das Verzerrungsmaß minimiert;

Empfangen eines zweiten Bildes mit dem Prozessor in einer zweiten Bittiefe, wobei die zweite Bittiefe geringer ist als die erste Bittiefe, wobei das erste Bild und das zweite Bild die gleiche visuelle Szene darstellen;

Codieren des zweiten Bildes unter Verwendung des Basisschicht-Encoders zur Erzeugung eines codierten BL-Bitstroms;

Decodieren des BL-Bitstroms zur Erzeugung eines decodierten BL-Bildes;

Anwenden der schichtübergreifenden Vorhersagefunktion auf das decodierte BL-Bild, um ein vorhergesagtes erstes Bild zu erzeugen;

Berechnen eines Restbildes auf der Grundlage des vorhergesagten ersten Bildes und des ersten Bildes;

Anwenden eines Maskierungsvorgangs auf das Restbild, um ein maskiertes Restbild zu erzeugen; und

Codieren des maskierten Restbildes mit dem Anreicherungsschicht-Encoder, um einen codierten EL-Bitstrom zu erzeugen, wobei der Maskierungsvorgang das Setzen aller Pixelwerte in dem Restbild auf Null umfasst, die niedriger sind als die optimale Hervorhebungsschwelle.

2. Verfahren zum Codieren von Bildern, wobei das Verfahren durch einen Zweischicht-Encoder durchgeführt wird, der einen Basisschicht-(BL)-Encoder und einen Anreicherungsschicht-(EL)-Encoder umfasst, wobei das Verfahren Folgendes umfasst:

Empfangen eines ersten Bildes (102) mit einer ersten Bittiefe durch einen Prozessor;

Berechnen (315) von Pixelkomplexitätsmaßen für Pixelwerte im ersten Bild;

Empfang eines Ziel-Bitratenverhältnisses ($\beta$), wobei das Ziel-Bitratenverhältnis ein Verhältnis einer Ziel-Bitrate in der Anreicherungsschicht zu einer Ziel-Bitrate in der Basisschicht des Encoders umfasst;

für jeden von zwei oder mehr in Frage kommenden Schwarzschwellenwerten das Bestimmen eines optimalen Schwarzschwellenwertes in einer Zwischenschicht-Vorhersagefunktion, wobei für alle Eingabewerte in die Zwischenschicht-Vorhersagefunktion, die größer als der optimale Schwarzschwellenwert sind, der entsprechende vorhergesagte Ausgabewert dem optimalen Schwarzschwellenwert entspricht, und wobei für alle Eingabewerte in die Zwischenschicht-Vorhersagefunktion, die kleiner oder gleich dem optimalen Schwarzschwellenwert sind, der entsprechende vorhergesagte Ausgabewert gleich dem Eingabewert ist:

Berechnen (320) eines geschätzten Bitratenverhältnisses, das ein Verhältnis einer geschätzten Bitrate in der Anreicherungsschicht zu einer geschätzten Bitrate in der Basisschicht für den in Frage kommenden Schwarzschwellenwert umfasst, wobei das Berechnen des geschätzten Bitratenverhältnisses das folgende Berechnen umfasst:

$$T_{S_l}(R_{BL}) = \frac{\sum_{m=0}^{S_l 2^b} \alpha \cdot w_m}{\sum_{m=0}^{2^b-1} w_m},$$

wobei $w_m$ für $m = 0$ bis $2^b-1$ ein Pixelkomplexitätsmaß für alle Pixel mit dem Wert m bezeichnet, wobei das Berechnen von $w_m$ das Berechnen einer kumulativen Standardabweichung von Pixeln in dem ersten Bild mit einem Wert gleich m umfasst, $\alpha$ eine Konstante ist, Si einen in Frage kommenden Schwarzschwellennwert in [0, 1) bezeichnet, und b die Bittiefe in dem Basisschicht-Encoder ist, und wobei der Basisschicht-Encoder und der Anreicherungsschicht-Encoder denselben Codec und dieselbe Bittiefe verwenden;
Berechnen eines Verzerrungsmaßes (325) auf der Grundlage des geschätzten Bitratenverhältnisses und des Zielbitratenverhältnisses;
Bestimmen des optimalen Schwarzschwellenwerts durch Berechnen des in Frage kommenden Schwarzschwellenwerts aus den zwei oder mehr in Frage kommenden Schwarzschwellenwerten, der das Verzerrungsmaß minimiert;
Empfangen eines zweiten Bildes mit dem Prozessor in einer zweiten Bittiefe, wobei die zweite Bittiefe geringer ist als die erste Bittiefe, wobei das erste Bild und das zweite Bild die gleiche visuelle Szene darstellen;
Codieren des zweiten Bildes unter Verwendung des Basisschicht-Encoders zur Erzeugung eines codierten BL-Bitstroms;
Decodieren des BL-Bitstroms zur Erzeugung eines decodierten BL-Bildes;
Anwenden der schichtübergreifenden Vorhersagefunktion auf das decodierte BL-Bild, um ein vorhergesagtes erstes Bild zu erzeugen;
Berechnen eines Restbildes auf der Grundlage des vorhergesagten ersten Bildes und des ersten Bildes;
Anwenden eines Maskierungsvorgangs auf das Restbild, um ein maskiertes Restbild zu erzeugen; und Codieren des maskierten Restbildes mit dem Anreicherungsschicht-Encoder, um einen codierten EL-Bitstrom zu erzeugen, wobei der Maskierungsvorgang das Setzen aller Pixelwerte in dem Restbild auf Null umfasst, die größer sind als die optimale Schwarzschwelle.

3.  Verfahren nach Anspruch 1 oder Anspruch 2, wobei das Berechnen des Verzerrungsmaßes das Berechnen eines absoluten Wertes der Differenz zwischen dem Ziel-Bitratenverhältnis und dem geschätzten Bitratenverhältnis umfasst.

4.  Verfahren nach einem der Ansprüche 1-3, weiter umfassend:
    Anwenden eines nichtlinearen Quantisierers auf das maskierte Restbild, um ein quantisiertes Restbild zu erzeugen, und Codieren des quantisierten Restbildes mit dem Anreicherungsschicht-Encoder, um den codierten EL-Bitstrom zu erzeugen.

5.  Verfahren nach einem der Ansprüche 1-4, wobei die erste Bittiefe 12 Bit oder mehr beträgt.

6.  Verfahren nach einem der Ansprüche 1-5, wobei das erste Bild ein HDR-Bild ist.

7.  Verfahren nach einem der Ansprüche 1-6, wobei die Bittiefe der Basisschicht (b) 10 Bit beträgt.

8. Einrichtung, die einen Prozessor umfasst und so konfiguriert ist, dass sie das Verfahren nach einem der Ansprüche 1-7 durchführt.

9. Computerprogrammprodukt, das darauf gespeicherte computerausführbare Anweisungen zum Ausführen des Verfahrens nach einem der Ansprüche 1-7 mit einem oder mehreren Prozessoren aufweist.

**Revendications**

1. Procédé de codage d'images, le procédé étant réalisé par un codeur de couche double, comprenant un codeur de couche de base (BL) et un codeur de couche d'amélioration (EL), le procédé comprenant :

la réception avec un processeur d'une première image (102) dans une première profondeur bits ;
le calcul (315) de mesures de complexité de pixels pour des valeurs de pixels dans la première image ;
la réception d'un rapport de débit binaire cible ($\beta$), le rapport de débit binaire comprenant un rapport d'un débit binaire cible dans la couche d'amélioration sur un débit binaire cible dans la couche de base du codeur ;
pour chacune de deux valeurs seuils de blancs lumineux candidates ou plus pour déterminer une valeur seuil de blancs lumineux optimale dans une fonction de prédiction intercouche, dans lequel pour toutes les valeurs d'entrée dans la fonction de prédiction intercouche supérieures à la valeur seuil de blancs lumineux optimale, la valeur de sortie prédite correspondante correspond à la valeur seuil de blancs lumineux optimale, et dans lequel pour toutes les valeurs d'entrée dans la fonction de prédiction intercouche inférieures ou égales à la valeur seuil de blancs lumineux optimale, la valeur de sortie prédite correspondante est égale à la valeur d'entrée :

le calcul (320) d'un rapport de débit binaire estimé qui comprend un rapport d'un débit binaire estimé dans la couche d'amélioration sur un débit binaire estimé dans la couche de base pour la valeur seuil de blancs lumineux candidate, dans lequel le calcul du rapport de débit binaire estimé comprend le calcul :

$$T_{S_h}(R_{BL}) = \frac{\sum_{m=S_h \cdot 2^b}^{2^\nu - 1} \alpha \cdot w_m}{\sum_{m=0}^{2^b - 1} w_m},$$

dans lequel $w_m$ pour $m = 0$ à $2^b$-1, désigne une mesure de complexité de pixels pour tous les pixels avec la valeur m, dans lequel le calcul de $w_m$ comprend le calcul d'un écart standard cumulatif de pixels dans la première image avec la valeur égale à $m$, $\alpha$ est une constante, $S_h$ désigne une valeur seuil de blancs lumineux candidate dans [0, 1), et $b$ est la profondeur de bits dans le codeur de couche de base, et dans lequel le codeur de couche de base et le codeur de couche d'amélioration utilisent le même codec et la même profondeur de bits ;
le calcul d'une mesure de distorsion (325) sur la base du rapport de débit binaire estimé et du rapport de débit binaire cible ;
la détermination de la valeur seuil de blancs lumineux optimale en calculant la valeur seuil de blancs lumineux candidate parmi les deux valeurs seuils de blancs lumineux candidates ou plus qui minimise la mesure de distorsion ;
la réception avec le processeur d'une seconde image dans une seconde profondeur de bits, dans lequel la seconde profondeur de bits est inférieure à la première profondeur de bits, dans lequel la première image et la seconde image représentent la même scène visuelle ;
le codage de la seconde image en utilisant le codeur de couche de base pour générer un flux binaires de BL codés ;
le décodage du flux binaire de BL pour générer une image de BL décodée ;
l'application de la fonction de prédiction intercouche à l'image de BL décodée pour générer une première image prédite ;
le calcul d'une image résiduelle sur la base de la première image prédite et de la première image ;
l'application d'une opération de masquage à l'image résiduelle pour générer une image résiduelle masquée ; et
le codage de l'image résiduelle masquée avec le codeur de couche d'amélioration pour générer un flux binaire de EL codé, dans lequel l'opération de masquage comprend la mise à zéro de toutes les valeurs de pixels dans l'image résiduelle qui sont inférieures au seuil de blancs lumineux optimal.

2. Procédé de codage d'images, le procédé étant réalisé par un codeur de couche double, comprenant un codeur de couche de base (BL) et un codeur de couche d'amélioration (EL), le procédé comprenant :

la réception avec un processeur d'une première image (102) dans une première profondeur de bits ;
le calcul (315) de mesures de complexité de pixels pour des valeurs de pixels dans la première image ;
la réception d'un rapport de débit binaire cible ($\beta$), le rapport de débit binaire cible comprenant un rapport d'un débit binaire cible dans la couche d'amélioration sur un débit binaire cible dans la couche de base du codeur ;
pour chacune de deux valeurs seuils de noirs candidates ou plus pour déterminer une valeur seuil de noirs optimale dans une fonction de prédiction intercouche, dans lequel pour toutes les valeurs d'entrée dans la fonction de prédiction intercouche inférieures à la valeur seuil de noirs optimale, la valeur de sortie prédite correspondante correspond à la valeur seuil de noirs optimale, et dans lequel pour toutes les valeurs d'entrée dans la fonction de prédiction intercouche supérieures ou égales à la valeur seuil de noirs optimale, la valeur de sortie prédite correspondante est égale à la valeur d'entrée :

le calcul (320) d'un rapport de débit binaire estimé qui comprend un rapport d'un débit binaire estimé dans la couche d'amélioration sur un débit binaire estimé dans la couche de base pour la valeur seuil de noirs candidate, dans lequel le calcul du rapport de débit binaire estimé comprend le calcul :

$$T_{S_i}(R_{BL}) = \frac{\sum\limits_{m=0}^{S_i 2^b} \alpha \cdot w'_m}{\sum\limits_{m=0}^{2^b - 1} w'_m},$$

dans lequel $w_m$ pour $m = 0$ à $2^b-1$, désigne une mesure de complexité de pixels pour tous les pixels avec la valeur $m$, dans lequel le calcul de $w_m$ comprend le calcul d'un écart standard cumulatif de pixels dans la première image avec la valeur égale à $m$, $\alpha$ est une constante, $S_l$ désigne une valeur seuil de noirs candidate dans [0, 1), et $b$ est la profondeur de bits dans le codeur de couche de base, et dans lequel le codeur de couche de base et le codeur de couche d'amélioration utilisent le même codec et la même profondeur de bits ;
le calcul d'une mesure de distorsion (325) sur la base du rapport de débit binaire estimé et du rapport de débit binaire cible ;
la détermination de la valeur seuil de noirs optimale en calculant la valeur seuil de noirs candidate parmi les deux valeurs seuils de noirs candidates ou plus qui minimise la mesure de distorsion ;
la réception avec le processeur d'une seconde image dans une seconde profondeur de bits, dans lequel la seconde profondeur de bits est inférieure à la première profondeur de bits, dans lequel la première image et la seconde image représentent la même scène visuelle ;
le codage de la seconde image en utilisant le codeur de couche de base pour générer un flux binaire de BL codé ;
le décodage du flux binaire de BL pour générer une image de BL décodée ;
l'application de la fonction de prédiction intercouche à l'image de BL décodée pour générer une première image prédite ;
le calcul d'une image résiduelle sur la base de la première image prédite et de la première image ;
l'application d'une opération de masquage à l'image résiduelle pour générer une image résiduelle masquée ; et
le codage de l'image résiduelle masquée avec le codeur de couche d'amélioration pour générer un flux binaire de EL codé, dans lequel l'opération de masquage comprend la mise à zéro de toutes les valeurs de pixels dans l'image résiduelle qui sont supérieures au seuil de noirs optimal.

3. Procédé selon la revendication 1 ou la revendication 2, dans lequel le calcul de la mesure de distorsion comprend le calcul d'une valeur absolue de la différence entre le rapport de débit binaire cible et le rapport de débit binaire estimé.

4. Procédé selon l'une quelconque des revendications 1-3, comprenant en outre :

l'application d'un quantificateur non linéaire à l'image résiduelle masquée pour générer une image résiduelle quantifiée et le codage de l'image résiduelle quantifiée avec le codeur de couche d'amélioration pour générer le flux binaire de EL codé.

5. Procédé selon l'une quelconque des revendications 1-4, dans lequel la première profondeur de bits est de 12 bits ou plus.

6. Procédé selon l'une quelconque des revendications 1-5, dans lequel la première image est une image de plage dynamique élevée.

7. Procédé selon l'une quelconque des revendications 1-6, dans lequel la profondeur de bits de la couche de base (b) est de 10 bits.

8. Appareil comprenant un processeur et configuré pour réaliser le procédé selon l'une quelconque des revendications 1-7.

9. Produit de programme informatique sur lequel est stockée une instruction exécutable par ordinateur pour exécuter le procédé selon l'une quelconque des revendications 1-7 avec un ou plusieurs processeurs.

EP 3 446 484 B1

**FIG. 1**

**FIG. 2A**

**FIG. 2B**

102

compute pixel complexity measures 315

compute $T_{Sh}$ ; estimated ratio of bitrates between EL and BL 320

$\beta$ → compare $T_{Sh}$ to $\beta$ ; target ratio of bitrates between EL and BL 325

330
update $S_h$

No ← Is dif. Min? 335

Yes

340
output $S^*_h$

**FIG. 3**

**REFERENCES CITED IN THE DESCRIPTION**

**Patent documents cited in the description**

- EP 2675162 A2
- US 2013073085 W
- WO 2014107255 A
- US 2015014482 W
- WO 2015123067 A, G-M Su
- US 62249779
- US 2016058906 W